# EUROPÄISCHE PATENTSCHRIFT

(11) **EP 2 906 491 B1**
(45) Veröffentlichungstag und Bekanntmachung des Hinweises auf die Patenterteilung: **26.07.2017**
(21) Anmeldenummer: 13798914.1
(22) Anmeldetag: 26.09.2013
(51) Int. Cl.: B65G 49/06, B65G 47/91, B65G 47/92, B65G 57/08, B65G 61/00

(54) **VERFAHREN UND VORRICHTUNG FÜR DAS BEFÖRDERN GROSSFLÄCHIGER PLATTEN IN EXTREMER ÜBERGRÖSSE**
METHOD AND APPARATUS FOR TRANSPORTING JUMBO SIZE GLASS SHEETS
PROCÉDÉ ET APPAREIL DE TRANSPORT DE FEUILLES DE VERRE TRÈS GRANDES

(30) Priorität: 09.10.2012 DE 102012019839
(43) Veröffentlichungstag der Anmeldung: 19.08.2015
(73) Patentinhaber: Grenzebach Maschinenbau GmbH, 86663 Asbach-Baeumenheim (DE)
(72) Erfinder: STRASS, Manfred, 86655 Harburg (DE)
(74) Vertreter: Kindermann, Peter
(86) Internationale Anmeldenummer: PCT/DE2013/000549
(87) Internationale Veröffentlichungsnummer: WO 2014/056469

(56) Entgegenhaltungen:
- WO-A1-2007/116080
- DE-A1- 19 712 368
- DE-A1-102005 060 452
- FR-A- 1 541 340
- FR-A1- 2 525 196
- US-A1- 2003 062 245
- US-A1- 2004 195 850
- US-A1- 2004 240 981
- US-A1- 2008 011 918
- US-A1- 2010 307 999

## Beschreibung

Die Erfindung betrifft das Umsetzen großflächiger Platten in extremer Übergröße. Unter extremer Übergröße werden hier Abmessungen über 40 Metern in der Länge und über 6 Metern in der Breite verstanden. Bevorzugt handelt es sich um Glasplatten.

Die Herstellung großflächiger Glasplatten erfolgt in der Form von Floatglas durch das fortlaufende Ausgießen einer Glasschmelze auf einem in einer länglichen Wanne erhitzten Zinnbad und das sich hieraus ergebende Glasband. Dieses Glasband weist eine Seite auf die auf dem Zinnbad lag, die so genannte Badseite. Die andere Seite des Glasbandes die an der Luft abgekühlt wurde, wird als die so genannte Luftseite bezeichnet. Die Badseite und die Luftseite weisen unterschiedliche Eigenschaften auf. Da zum Beispiel die Luftseite weniger Unebenheiten aufweist eignet sie sich besser für Beschichtungen. Das anschließende Konfektionieren des Floatglases geschieht durch Längsschneiden und Querschneiden des aus der Floatglasfertigung mit einer bestimmten Vorschubgeschwindigkeit auslaufenden Glasbandes. Das Längsschneiden bewirken hierbei in entsprechender Position über dem Glasband stationär installierte Längsschneidräder und das Querschneiden erfolgt mit Hilfe von Schneidbrücken und daran quer über das Glasband bewegten Querschneidrädern. Auf diese Weise können Glasplatten von beträchtlicher Größe hergestellt werden. Als so genanntes Bandmaß oder Großformat wird hierbei eine Größe von 6 Meter mal 3,21 Meter bezeichnet. Als so genanntes geteiltes Bandmaß oder Mittelformat wird eine Plattengröße von 3,21 Meter mal 2 Meter (bis 2,5 Meter) bezeichnet.

Um Glasplatten von solcher Größe bruchfrei von einem Ort zu einem anderen zu transportieren, werden hierzu Haltemechanismen, meist in der Form eines in sich stabilen Rahmens, an die betreffende Glasplatte heranbewegt, mit diesem über Saugnäpfe verbunden, und dann wird der Haltemechanismus mit der daran angesaugten Glasplatte weiter befördert.

Aus dem Stand der Technik ist aus der DE 197 12 368 A1 ein Verfahren zum Versetzen von Gegenständen von einer ersten Stelle zu einer zweiten Stelle unter Verwendung eines den Gegenstand während des Versetzens an sich bindenden Haltemechanismus bekannt, bei dem die Aufgabe gelöst werden soll, dieses Verfahren derart weiterzubilden, dass auf einfache Weise ein unter allen Umständen sicheres Versetzen von Gegenständen durchgeführt werden kann. Als zu versetzende Gegenstände werden dabei Glasscheiben genannt.
Die Lösung dieser Aufgabe wird, gemäß den Angaben im Kennzeichen des Anspruchs 1, dadurch gelöst, dass das Heranfahren des Hubmechanismus an den zu versetzenden Gegenstand an die erste oder die zweite Stelle unter Berücksichtigung der tatsächlichen Lage und / oder Ausrichtung derselben erfolgt, wobei der Haltemechanismus bei Bedarf unter Ausnutzung einer freien Drehbarkeit und / oder Schwenkbarkeit desselben um eine oder mehrere Achsen ausgerichtet wird.
Im weiter beanspruchten Vorrichtungsanspruch 7 wird näher erläutert, dass der zu versetzende Gegenstand eine Glasscheibe ist, dass die erste Stelle ein Innenlader - Gestell ist, und dass die zweite Stelle ein Förderband und der Haltemechanismus ein Saugrahmen sind.

In der der DE 101 48 038 A1 ist eine Einrichtung zur Plattenübergabe von einem Plattenförderer auf ein Stapelgestell oder dergleichen beschrieben, mit einem Roboter mit einem Roboterarm der an seinem freien Ende einen Saugrahmen oder dergleichen zum Aufnehmen einer Platte vom Plattenförderer trägt, und der mit einer für seine Bewegungsfunktion ausreichenden Anzahl von Freiheitsgraden ausgestattet ist.
Der Weiterbildung einer solchen Einrichtung liegt die Aufgabe zugrunde, eine Einrichtung zur Plattenübergabe von einem Plattenförderer auf ein Stapelgestell so auszubilden, dass, im Falle einer Glasplatte, möglichst keine Beeinträchtigung der Luftseite des Glases erfolgt.

Gelöst wird diese Aufgabe dadurch, dass der Plattenförderer mit einer Aussparung, in welche der Roboterarm eintauchen kann, und mit, ein Eintauchen auch des Saugrahmens oder dergleichen ermöglichenden, Aussparungen versehen ist. Ferner soll der Saugrahmen oder dergleichen am freien Ende des Roboterarms in eine nach oben weisende Position schwenkbar angeordnet sein, um aus der in die Aussparungen des Plattenförderers eintauchenden Position eine Platte an ihrer dem Plattenförderer zugewandten Seite zu ergreifen.

Das hier verwendete Stapelgestell ist unbeweglich am Boden befestigt, es kann somit nur von der, dem Roboterarm zugewandten, Seite bestückt werden. Außerdem muss das Stapelgestell jeweils beim Beladen mit einer weiteren Glasplatte um die geringe Distanz der Dicke einer Glasplatte vom Roboterarm weggerückt werden, da der Abstand des Roboterarms eine feste Größe darstellt. Hierzu sind in der Praxis beim derzeitigen Stand der Technik so genannte Taktschlitten notwendig, die das Stapelgestell jeweils vor dem Beladen mit einer neuen Glasplatte um die Distanz einer Glasplatten - Dicke vom Roboterarm wegrücken, um den Platz für eine weitere Glasplatte frei zu machen. Ferner ist zum Beladen des Stapelgestells von der anderen Seite eine Drehscheibe notwendig. Für das Beladen des Stapelgestells mit großen und schweren Glasplatten sind der benötigte Taktschlitten und die erforderliche Drehscheibe der auftretenden Belastung gemäß aufwendig konstruiert und in der Herstellung sehr teuer.

In der auf die Anmelderin zurückgehenden WO 2009/094995 A1 wird ein Portalumsetzer für großflächige Glasplatten beschrieben.

Aus der Druckschrift DE 10 2005 060 452 A1 sind eine Vorrichtung und ein Verfahren für das Befördern von Platten, insbesondere Glasplatten, mit den folgenden Merkmalen bekannt:
einer mit Förderrollen bestückten Förderlinie, einer Vielzahl von hintereinander linear angeordneten Portalstützen, die mittels Führungsträgern verbunden sind und Säulenschlitten tragen, einer Vielzahl von Kammgreifern, die, jeweils mittels eines Säulenschlittens horizontal auf den Führungsträgern bewegt und von einer Hubsäule vertikal geführt, mittels einer Schwenk- und Dreheinrichtung positioniert werden, wobei die Kammgreifer mit Saugern bestückt sind, und wobei jeder Kammgreifer mittels einer Teleskopvorrichtung auf beiden Seiten die Breite seines Erfassungsbereichs verändern kann und eine kammartige Struktur mit fingerartigen Tragelementen aufweist, und wobei diese Tragelemente mit einer Anzahl von Saugern bestückt sind, und einem Stapelgestell zum linksgeneigten Abstellen einer Glasplatte und/oder einem Stapelgestell zum rechtsgeneigten Abstellen einer Glasplatte.

Aus der Druckschrift DE 197 12 368 A1 sind ein Verfahren und eine Vorrichtung zum Versetzen eines Gegenstandes, insbesondere einer Glasscheibe, bekannt, wobei schwenkbare Hebevorrichtungen mit Saugern für die Befestigung der Glasscheiben verwendet werden.

Aus der Druckschrift WO 2007/116080 A1 ist ein Dünnglasgreifer bekannt, bei dem die Greifarme in ihrer axialen Richtung teleskopierbar sind.

Weiterhin offenbaren die Druckschrift US 2008/011918 A1 sowie die Druckschrift US 2004/195850 A1 kammartige Greifer, welche hinsichtlich ihrer Greifposition ausfahrbar und mit Saugern bestückt sind.

Ferner zeigt die Druckschrift US 2003/062245 A1 eine Vorrichtung zum Transportieren von Platten, wobei die Greifarme eine jeweilige Platte sowohl von der Badseite als auch von der Luftseite aufnehmen können.

Aus den Druckschriften FR 1 541 340 A und FR 2 525 196 A1 sind Vorrichtungen zum automatischen Abbrechen einer Glastafel und zum Befördern von Glasplatten bekannt, wobei eine Hebevorrichtung links oder rechts in einem Winkel bis zu 90 Grad schwenkbar ist.

In der Druckschrift US 2004/240981 A1 sind eine Vorrichtung und ein Verfahren zum Umsetzen von Glasplatten beschrieben, wobei Sensoren unter der Transportvorrichtung angeordnet sind und eine exakte Lage der Glasplatten bestimmen. Ferner sind Sensoren zum Sammeln von charakteristischen Eigenschaften der beförderten Produkte beschrieben.

Schließlich ist aus der Druckschrift US 2010/0307999 A1 eine Vorrichtung und ein Verfahren zum Versetzen von großflächigen Glasplatten bekannt, wobei Kammgreifer mit Saugern bestückt sind und mittels eines Säulenschlittens horizontal bewegt und vertikal geführt werden können.

Weiter ist aus dem Stand der Technik, ohne druckschriftlichen Nachweis, bekannt geworden, dass Glasplatten bis 16 Metern Länge und 4 Metern Breite mit extrem stark dimensionierten Bauteilen gehandhabt wurden. Bei diesen Dimensionen erschöpften sich jedoch die Möglichkeiten der normalen Technik.

Der erfindungsgemäßen Vorrichtung bzw. dem entsprechenden Verfahren liegt deshalb die Aufgabe zugrunde, bei normaler Lage sehr großer Glasplatten in Größt - Abmessungen, das heißt über 40 Metern Länge und über 6 Metern Breite, auf der Fertigungslinie in kürzester Zeit zu erfassen, schwingungsfrei aufzunehmen und sicher zu stapeln. Da eine solche Platte auch beschichtet werden muss und eine solche Beschichtung meist auf der glatteren Seite, nämlich der Luftseite, aufzubringen ist, ist es notwendig, diese Platte auch von der Badseite her erfassen zu können.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 4 gelöst.

In den Unteransprüchen sind weitere vorteilhafte Ausgestaltungen der Erfindung gekennzeichnet.

Im Folgenden wird die Erfindung anhand von Figuren näher beschrieben.

Es zeigen im Einzelnen:
Fig.1 : eine perspektivische Darstellung eines Teils der Gesamtvorrichtung
Fig.2: eine Schnittzeichnung durch die Gesamtvorrichtung
Fig.3: eine weitere Schnittzeichnung durch die Gesamtvorrichtung
Fig.4: eine Detailzeichnung eines Kammgreifers 22
Fig.5: eine Schnittzeichnung mit 2 Hubsäulen 4
Fig. 6: ein Verteil - Schema von Greif - Elementen
Fig. 7: einen Schnitt durch einen Power - Sauger 39
Fig. 8: einen Schnitt durch einen Präzisions - Sauger 40
Fig. 9: eine Darstellung der Synchronisierung der Kammgreifer 22

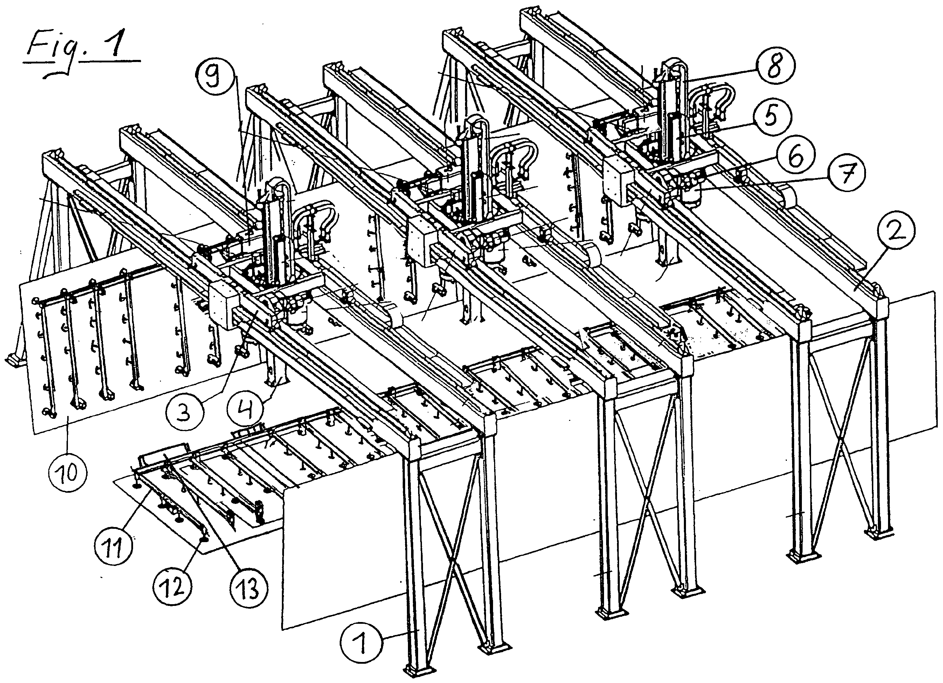

Die Fig. 1 zeigt eine perspektivische Darstellung eines Teils der erfindungsgemäßen Gesamtvorrichtung. Da es sich bei der erfindungsgemäßen Vorrichtung um das Befördern von Glasplatten in extremer Übergröße, nämlich in der Größenordnung von über 40 Metern Länge und über 6 Metern in der Breite handelt, ist ersichtlich, dass in der Fig.1 nicht die ganze Beförderungsanlage in ihrer gesamten Länge dargestellt werden kann. Dies erscheint auch nicht notwendig, da die Struktur der Beförderungsmittel sich auf der gesamten Läge der Anlage nicht ändert.

Eine Anlage zur Beförderung einer solch großen Glasplatte erscheint weltweit einmalig. Deshalb gibt es offensichtlich auch keine Vorbilder zur Lösung der hier vorliegenden Aufgabe.

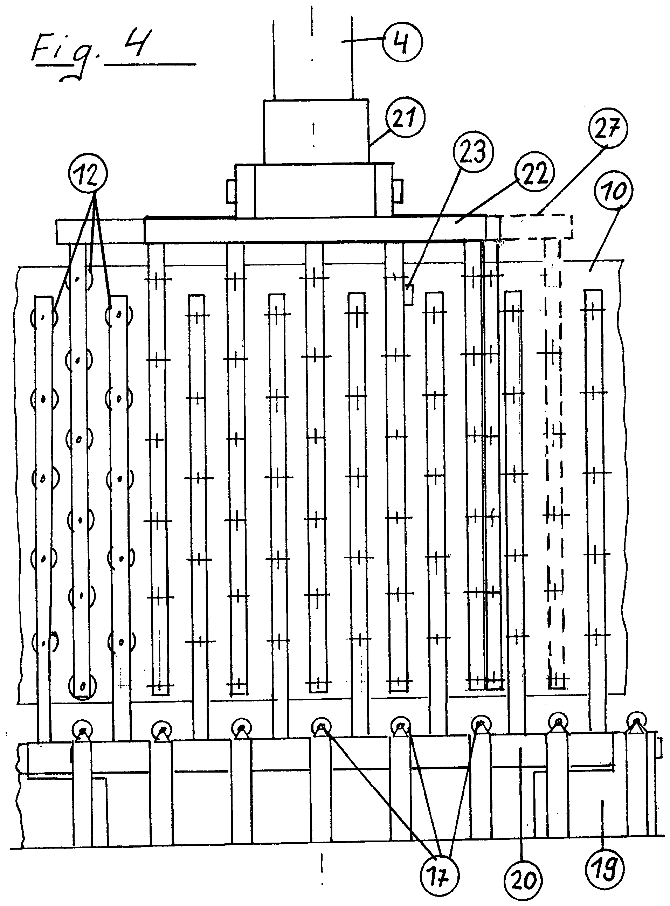

In der Fig. 1 ist zu erkennen wie die Portalstützen 1, durch die weit spannenden Führungsträger 2 verbunden, gewissermaßen ein weites Portal bilden, das einem solchen Portalumsetzer seinen Namen gegeben hat. Durch diese stabile Konstruktion ist gewährleistet, dass einerseits zwischen den Portalstützen 1 genügend Platz geschaffen ist, um auch sehr große Glasplatten 10 aufzunehmen und dem gewünschten Platz zuführen zu können und andererseits die Positioniergenauigkeit des jeweiligen Säulenschlittens 3 , der jeweils eine Hubsäule 4 trägt, auch bei der Handhabung sehr großer und sehr schwerer Glasplatten 10 erhalten bleibt. Dies wird besonders dadurch erreicht, dass das Gesamtgewicht, das sich aus dem Gewicht einer Glasplatte 10 und dem zusätzlichen Gewicht der diese haltenden Konstruktion ergibt, nach der Art einer Waage so kompensiert wird, dass lediglich das Gewicht der jeweiligen Glasplatte 10 als Steuerungsparameter zugrunde gelegt wird. Das Differenzgewicht zwischen dem zu dirigierenden Gesamtgewicht einer Glasplatte 10 und der diese erfassenden Vorrichtung, die im Wesentlichen aus den Saugern 12 und deren Tragkonstruktion besteht, wird durch die Steuerung von Druckluft im Gewichtsausgleich 5 bewirkt. Das heißt, dieses Differenzgewicht wird über einen Druckzylinder entsprechend dem Hebelgesetz auf der Gegenseite eines Hebesystems aufgebracht und gleicht somit das Differenzgewicht aus. Auf diese Weise werden der Steuerung des Portalumsetzers die Parameter vermittelt, die dem tatsächlichen Gewicht der jeweils umzusetzenden Glasplatte 10 entsprechen. Die für diesen Vorgag benötigte Druckluft wird im Druckluftbehälter 7 gespeichert. Auf dese Weise wird erreicht, dass die, die Bewegung einer bestimmten Glasplatte 10 übertragenden, Zahnriemen nicht unzulässig beansprucht werden. Zusätzlich wird erreicht, dass die Flanken der verwendeten Zahnriemen lediglich einseitig belastet werden und die Steuerung somit insgesamt sehr präzise erfolgen kann. Mit dieser Vorrichtung ist es natürlich auch möglich das Gewicht einer Glasplatte 10 quasi zu "überkompensieren" und diese somit für den Vorgang des Umsetzens leichter erscheinen zu lassen als deren tatsächlichem Gewicht entspricht. Eine solche Vorgehensweise mag im Einzelfall bei dem Umsetzen besonders schwerer Glasplatten 10 angezeigt erscheinen.
Der horizontal wirkende Schlittenantrieb 6 in der Form eines Servomotors bewegt den jeweiligen Säulenschlitten 3. In dem gezeigten Leitungskanal 8 verlaufen die Energiezuführung und die Steuerung für die jeweilige Hubsäule 4. Eine Vakuumpumpe 9 liefert den für den jeweiligen Sauger 12 benötigten Unterdruck, wobei die Sauger 12 an den quer zu einem Rollenförderer verlaufenden Querträgern 11 befestigt sind, die hier stilisiert horizontal liegend gezeichnet sind. In einem Schaltkasten 13 im Bereich der vordersten Sauger 12 ist ein elektrischer Schaltkasten 13 installiert.

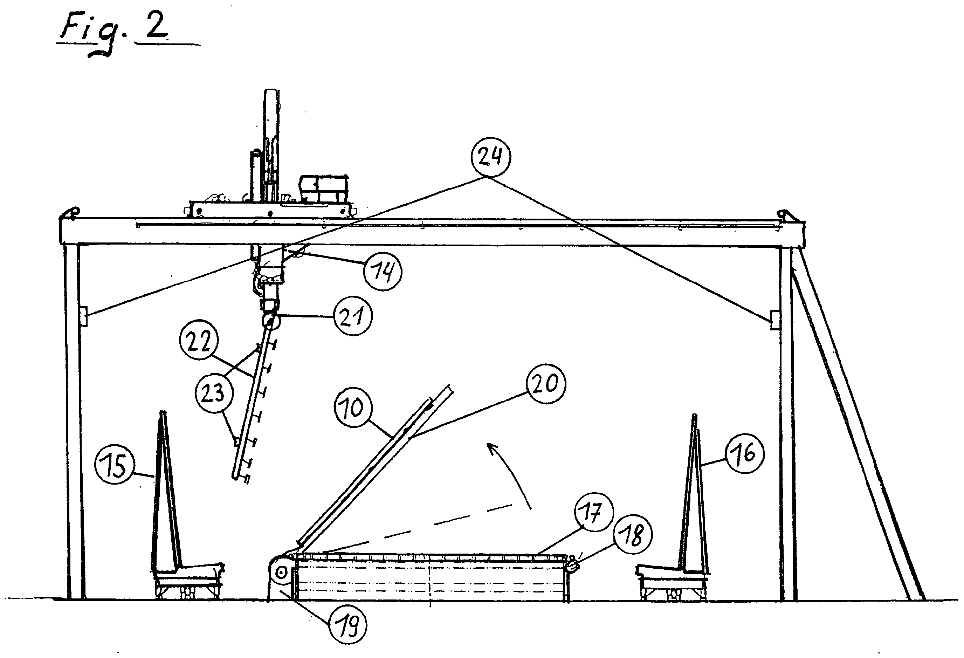

In der Fig. 1 sind von der eben beschriebenen Portalstützen - Struktur lediglich 3 Exemplare beispielhaft hintereinander dargestellt. Mit der Länge der zu befördernden Glaspatte 10 erhöht sich natürlich auch die Anzahl der benötigten Portaltore, wobei sich das Gesamtgewicht einer Glasplatte 10 auf die zur Verfügung stehenden Portaltore verteilt. Mit der Erhöhung der Breite einer zu befördernden Glasplatte 10 erhöht sich natürlich auch deren Gewicht zusätzlich. Auch dies wirkt sich naturgemäß auf die Dichte der nebeneinander angeordneten Portaltore, also ebenfalls ihrer Anzahl, aus. In der Fig. 2 ist eine Schnittzeichnung durch die Gesamtvorrichtung dargestellt. Die oben genannten Einrichtungen sind zum großen Teil auch aus der Schnittzeichnung dieser Figur zu ersehen. Zusätzlich ist hier der Säulenantrieb 14 zu erkennen, der in Form eines Servomotors die Vertikalbewegung der Hubsäule 4 ausführt. Auf der linken Seite sind ein Stapelgestell 15 und auf der rechten Seite ein Stapelgestell 16 im Schnitt dargestellt.
In der Bildmitte lagert in Schrägstellung eine Glasplatte 10 auf einer Vertikalhebevorrichtung 20. Diese Vorrichtung verfügt über eine kammartige Struktur, wobei deren fingerartige Tragelemente mit Saugern 12 besetzt sind, die in dieser Darstellung nicht zu erkennen sind. Zu näheren Erläuterungen wird auf die Fig. 4 verwiesen. In diese gezeigte Position auf der Vertikalhebvorrichtung 20 wurde die Glasplatte 10 mittels ihres Verschwenk - Antriebs 19 verschwenkt, wobei diese Vertikalhebevorrichtung 20 von unten durch die Förderrollen 17 die Glasplatte 10 mittels der erwähnten kammähnlichen Struktur abgehoben hat. Der Antrieb mittels dessen die Förderrollen 17 das zu befördernde Glasband in den Bereich der erfindungsgemäßen Anlage verbracht haben, ist mit 18 bezeichnet. Die Vertikalhebevorrichtung 20 ist mittels ihrer Sauger 12 in der Lage eine Glasplatte bis in eine Schräglage von etwa 90 Grad zu verschwenken.
Die Hubsäule 4 trägt in der Fig. 2 eine Dreh - und Schwenkeinrichtung 21 die einem Kammgreifer 22 zugeordnet ist. Zur geordneten Steuerung des dargestellten Kammgreifers 22 dienen Abstandssensoren 23. In der gezeigten Lage ist der Kammgreifer 22 in der Lage die Glasplatte 10 von oben, in diesem Fall von der Luftseite her, zu erfassen und, nach dem Abschwenken der Vertikal - Hebevorrichtung 20 auf dem rechten Stapelgestell 16 abzusetzen.
Für die Steuerung der gesamten Beförderungsanlage sind an jeder Portalstütze jeweils so genannte Feldsensoren 24 installiert, die aufeinander gerichtet sind. Ihre Bedeutung wird später erläutert.

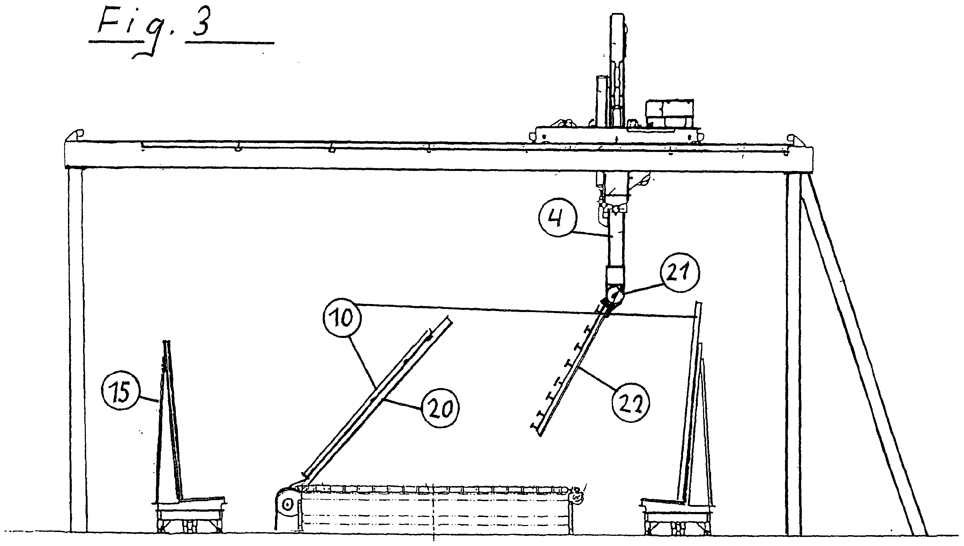

Die Fig. 3 zeigt eine weitere Schnittzeichnung durch die Gesamtvorrichtung. Hier wird dargestellt wie ein Kammgreifer 22, der über eine Schwenk - und Dreheinrichtung 21 mittels einer Hubsäule 4 bewegt wird, von unten durch eine Vertikal - Hebevorrichtung 20 greift und eine Glasplatte 10 auf der Badseite erfasst. In der Folge schwenkt die Vertikal - Hebevorrichtung 20 nach unten und der Kammgreifer 22 hebt die Glasplatte 10 hoch und setzt sie, mit der Badseite nach oben, auf dem linken Stapelgestell 15 ab. Auf dem rechten Stapelgestell 16 ist eine bereits abgestellte andere Glasplatte 10 gezeigt.

Die Fig. 4 zeigt eine Detailzeichnung eines Kammgreifers 22. Gehaltert und geführt wird dieser Kammgreifer 22 über die Schwenk - und Dreheinrichtung 21 und er wird bewegt mittels der zentral dargestellten Hubsäule 4.
Da jeder Kammgreifer 22 im Laufe seines Bewegungsprogramms sich um die Zentralachse seiner Hubsäule 4 drehen können muss, um bei dicht stehenden Portalstützen seine Position verändern zu können, ist erfindungsgemäß vorgesehen, dass jeder Kammgreifer 22 mittels jeweils einer Teleskopvorrichtung 27 auf beiden Seiten die Breite seines Erfassungsbereichs verändern kann. Zu dieser Darstellung ist in der Fig. 4 die rechte Seite des gezeigten Kammgreifers 22 gestrichelt gezeichnet. Auf der linken Seite sind hier Sauger 12 beim Erfassen einer Glasplatte 10 gezeigt. Da die Glasplatte 10 durchsichtig ist, sind in dieser Darstellung die fingerartigen Tragelemente der kammartigen Hebestruktur der Vertikal - Hebevorrichtung 20 mit ihren Saugern 12 zu erkennen. Weitere Sauger sind lediglich mittels Kreuzen markiert.
Am unteren Bildrand sind die Förderrollen 17 im Querschnitt und der Antrieb 19 für die Vertikal - Hebevorrichtung 20 zu erkennen.

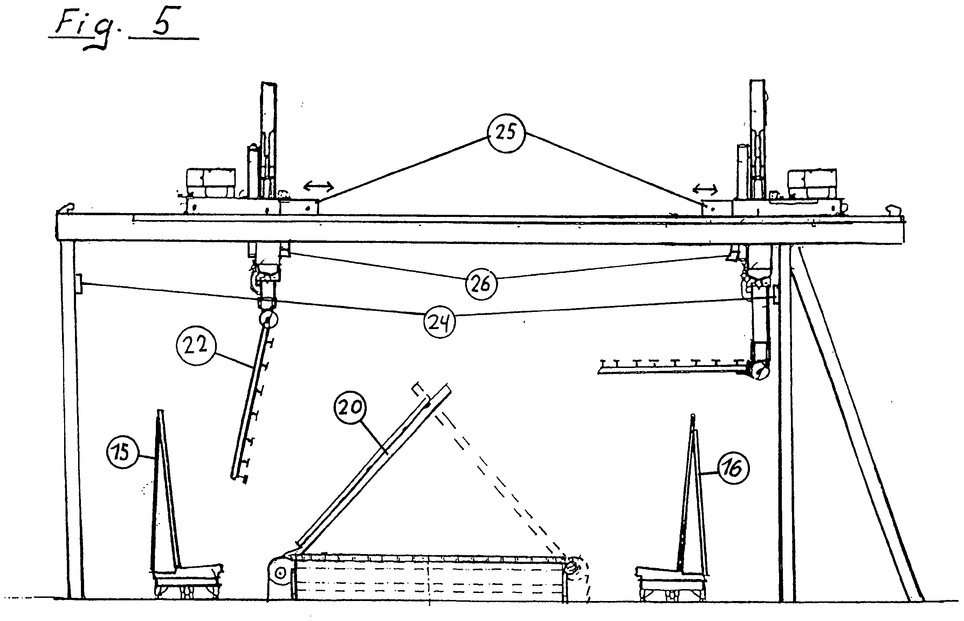

In der Fig. 5 ist eine Schnittzeichnung mit 2 Hubsäulen dargestellt.
Hier ist in der Hauptsache gezeigt, dass die Vertikal - Hebevorrichtung 20 linksseitig oder rechtsseitig angeschlagen sein kann. Zur Demonstration sind 2 verschiedene Kammgreifer 22 gezeigt, um darzustellen, dass auf diese Weise sowohl das linke Stapelgestell 15, als auch das rechte Stapelgestell 16 direkt von der Vertikal - Hebevorrichtung 20 beladen werden kann. Gezeigt sind hier wieder die Feldsensoren 24, auf die später verwiesen wird. Zusätzliche Sensoren 26 zur Erfassung der Greifer erleichtern die Feinsteuerung der Kammgreifer 22 untereinander. Für die Abstützung der Säulenschlitten 3 bei besonders schweren Traglasten sind zusätzlich ausfahrbare Stabilisatoren 25 vorgesehen.

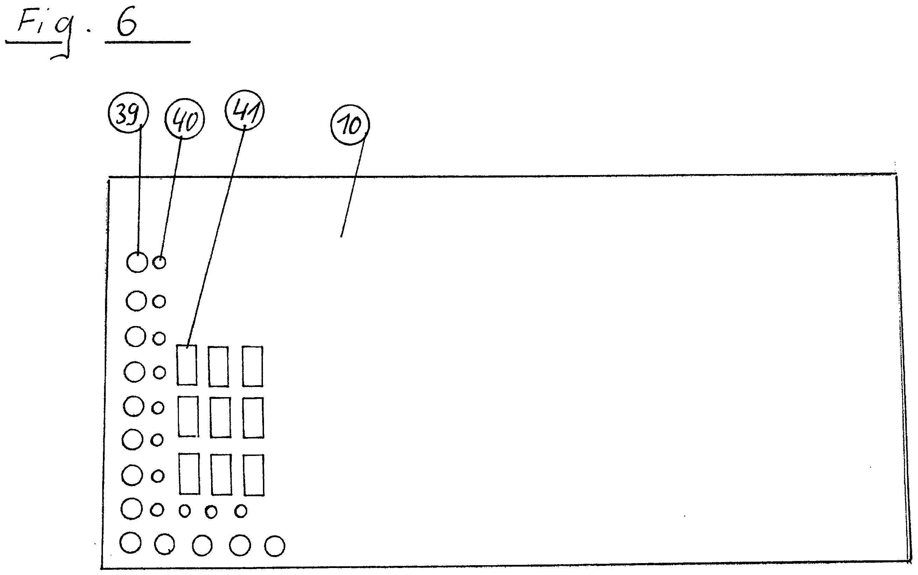

In der Fig. 6 ist ein Verteil - Schema von Greif - Elementen skizziert. Bisher wurden die Struktur und die Funktion der Kammgreifer 22 behandelt, wobei lediglich von Saugern 12, gewissermaßen als alleinigen Funktionsträgern, gesprochen wurde. In der Fig.6 wird näher dargelegt, dass es für die Beförderung und den Schutz einer solch riesigen Glasplatte 10 notwendig ist die verwendeten Kammgreifer mit verschiedenen Arten von Saugern 12 zu bestücken.
So ist hier beispielhaft an einer stilisierten Glasplatte 10 dargestellt, dass im Randbereich bevorzugt so genannte Power - Sauger 39 neben, mehr der exakten Fixierung dienenden, so genanten Präzisions - Saugern 40 zur Anwendung kommen.
Da es für die spätere Beschichtung einer Glasplatte 10 wichtig ist in der Mitte keine Abdrücke von Saugerringen zu haben werden in diesem Bereich bevorzugt so genannte elektrostatische Greifer 41 verwendet. Solche elektrostatischen Greifer sind Stand der Technik und können quer zur Werkstückoberfläche Kräfte von bis zu 20 N/cm² übertragen (Ref.Nr.: 1981 RWTH Aachen). Bevorzugt werden hierbei zusätzlich auch, nicht näher bezeichnete, Ultraschallgreifer verwendet.

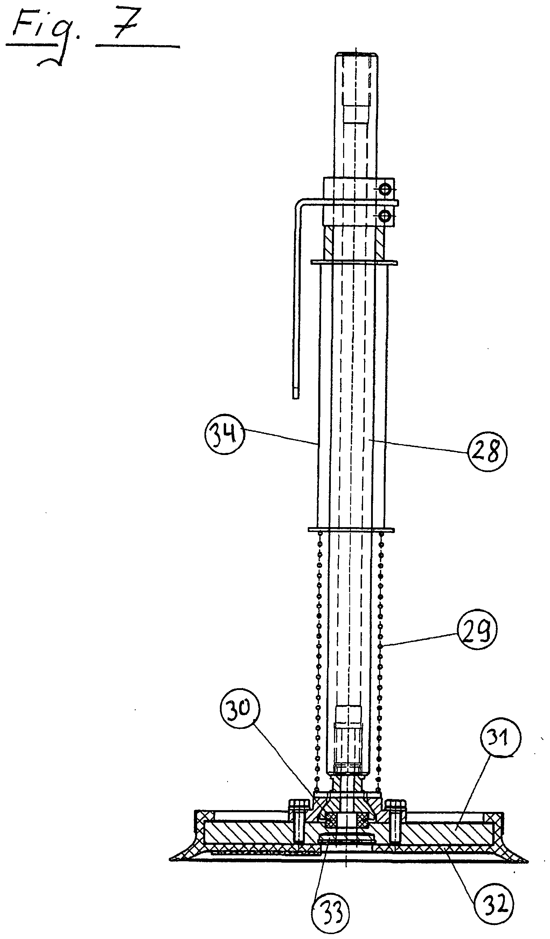

In der Fig. 7 ist ein Schnitt durch einen so genannten Power - Sauger 39 dargestellt. Dieser Typ Sauger besteht im Wesentlichen aus einem Saugerschaft 28 der in einem Führungs - und Halterungsrohr 34 steckt und aus einem an diesem befestigten Saugteller 31. Eine Ausgleichsfeder 29, die zwischen dem Führungs - und Halterungsrohr 34 und dem Saugteller 31 gelagert ist, sorgt einerseits für ein sanftes Aufsetzen des Saugtellers 31 auf der Glasplatte 10 und andererseits unterstützt sie bei einer Schrägstellung die flexible Saugtellerhalterung 30. Diese Saugtellerhalterung ist aus einem weichen, aber gut stoßdämpfenden Material gefertigt und stellt eine harmonische Verbindung zwischen dem Saugerschaft 28 und dem Saugteller 31 dar. Die kreisförmige Saugermanschette 32 mit ihrer besonders haftfähigen Randlippe stellt die eigentliche Verbindung zu der Glasplatte 10 her. Der Saugteller 31 weist in seiner Mitte ein kreisförmiges Filterelement 33 auf. Dieses dient dem Zweck feine Glaspartikel von der Vakuumpumpe 9 fernzuhalten. Es kann entweder von Hand gereinigt werden oder in bestimmten Abständen ausgewechselt werden. Durch einen nicht extra gezeigten Sensor kann der Durchlasswiderstand des Filterelements 33 eines jeden Saugers 39 in einer besonderen Ausbaustufe erfasst und an einem Monitor angezeigt werden.
Weiterhin kann es vorgesehen sein, dass einzelne Sauger einzeln für sich abschaltbar sind und / oder mit einstellbarer Unterdruck - Luft beaufschlagt werden können.

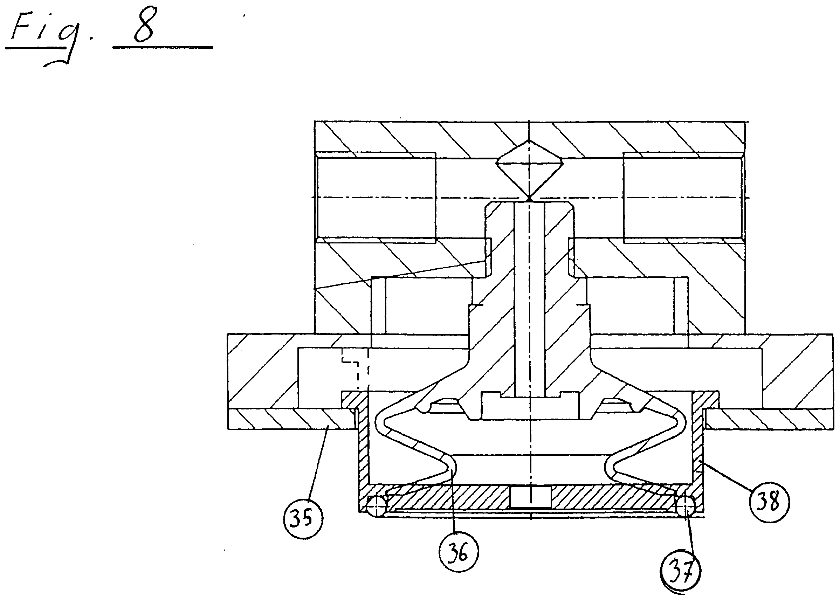

Die Fig. 8 zeigt einen Schnitt durch einen so genannten Präzisions - Sauger 40.
In dieser Darstellung ist die spezielle Wirkung dieses Saugers zu erkennen. Da es bei den aufzunehmenden Scheiben, wichtig ist, dass diese absolut in ebener Lage transportiert und aufgebracht werden, muss auch bei jedem Saugerkopf die Fläche mit der die jeweilige Scheibe von dem jeweiligen Saugerkopf berührt wird, absolut eben sein. Dies wird dadurch erreicht, dass in der gezeigten Darstellung der Dichtring 37 in einem Saugerkopf 38 aus festem Material geführt ist. Der Saugerkopf 38 gleitet hierbei zusammen mit dem Gummibalg 36 in der Halteplatte 35. Ein wellenförmiges Verbiegen der aufgenommenen Scheibe an den Stellen der Angriffspunkte der jeweiligen Sauger, wie bei anderen Ausführungen im Stand der Technik mit flexibler Dichtlippe zu befürchten, ist hierbei ausgeschlossen. Der Saugerkopf 38 kann hierbei zum Beispiel auch annähernd quadratisch sein oder eine andere beliebige Flächenform aufweisen, die in der jeweils aufgenommenen Scheibe möglichst wenig mechanische Spannung induziert. So kann zum Beispiel in diesem Zusammenhang eine elliptisch geformte Fläche zur Reduzierung der Spannungen während der Aufnahme und des Transports in der jeweiligen Scheibe beitragen.

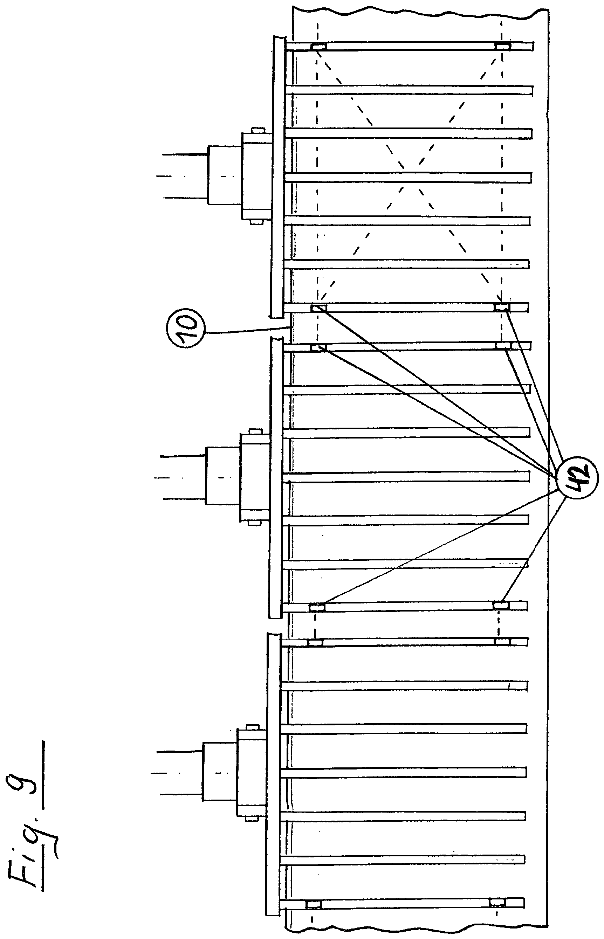

Die Fig. 9 zeigt eine Darstellung der Synchronisierung der Kammgreifer 22. Hier sind beispielhaft drei Kammgreifer 22 nebeneinander gezeigt die jeweils zwei Lasersensoren 42 an den beiden Enden ihrer äußeren fingerartigen Tragelemente tragen. Diese Lasersensoren 42 sind in der Lage Laserstrahlen zur Kommunikation mit dem jeweils benachbarten Kammgreifer 22 auszusenden, jedoch auch solche Kommunikationssignale zu empfangen. Auf diese Weise ist es einer zentralen Steuerung möglich, sämtliche, für die Beförderung der jeweiligen Glasplatte 10 benötigten, Kammgreifer in einer Reihe und in einer Höhe geradlinig auszurichten. Da solche benachbarten Lasersensoren 42 auch diagonal kommunizieren können, ist es auf diese Weise möglich Verwindungen einzelner Kammgreifer 22 zu detektieren und steuerungstechnisch zu korrigieren.
Die auf diese Weise steuerungstechnisch definierte Ebene der Gesamtheit der jeweils verwendeten Kammgreifer 22 bildet die Ausgangsbasis für die Bestimmung der Abstände der einzelnen, an dieser Stelle Haftelemente genannten, Sauger oder elektrostatischer Greifer, zu der Glasplatte 10. Da jedes der betreffenden Haftelemente ein anderes Druckverhalten, bzw. Dämpfungsverhalten beim Anhaftvorgang aufweist, kann auf diese Weise mittels des Aufbaus eines, zumindest gruppenweise, individuellen Saugdrucks, bzw. Anhaftdrucks, über die gesamte Fläche einer Glasplatte 10 ein relativ konstanter Anpressdruck erreicht werden. Hierzu sind gruppenweise orientierte zusätzliche Abstandssensoren vorgesehen, die aus Gründen der Übersicht nicht extra eingezeichnet und auch nicht mit Bezugszeichen versehen sind. Im Prinzip ließe sich natürlich jedem einzelnen Haftelement ein solcher Sensor zuordnen, jedoch sind bei der Behandlung einer solch großen Glasplatte 10 wegen der resultierenden Datenfülle technische und ökonomische Grenzen zu sehen.

Es wird noch darauf hingewiesen, dass die Portalstützen (1), die Kammgreifer (22) und die Vertikal - Hebevorrichtung (22) selbstverständlich auch vereinzelt angewendet werden können.

Hinsichtlich der verwendeten Feldsensoren 24 wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges.

Die Steuerung der komplexen Bewegungsvorgänge und die Signalverarbeitung der verwendeten Sensoren erfordern ein spezielles Steuerungsprogramm.

### Bezugszeichenliste

- 1: Portalstützen
- 2: Führungsträger, Fahrträger
- 3: Säulenschlitten, Fahrwagen
- 4: Hubsäule
- 5: Gewichtsausgleich, Ausgleichszylinder
- 6: Schlittenantrieb, Fahrwagenantrieb
- 7: Druckluftbehälter für Ausgleichszylinder
- 8: Leitungskanal für Hebeeinrichtung
- 9: Vakuumpumpe
- 10: Glasplatte
- 11: Querträger für Sauger, Verteilerrohr
- 12: Sauger
- 13: Schaltkasten
- 14: Säulenantrieb
- 15: linkes Stapelgestell
- 16: rechtes Stapelgestell
- 17: Förderrollen
- 18: Antrieb der Förderrollen
- 19: Antrieb für Vertikal - Hebevorrichtung
- 20: Vertikal - Hebevorrichtung
- 21: Schwenk - und Dreheinrichtung für Kammgreifer
- 22: Kammgreifer
- 23: Abstandssensoren
- 24: Feldsensoren
- 25: Stabilisator
- 26: Sensoren für Greifer - Detektion
- 27: Teleskopvorrichtung an einem Kammgreifer
- 28: Saugerschaft
- 29: Ausgleichsfeder
- 30: flexible Saugtellerhalterung
- 31: Saugteller
- 32: Saugermanschette
- 33: Filterelement
- 34: Führungs - und Halterungsrohr
- 35: Halteplatte
- 36: Gummibalg
- 37: Dichtring
- 38: Saugerkopf
- 39: Power - Sauger
- 40: Präzisions - Sauger
- 41: elektrostatischer Greifer
- 42: Lasersensor

## Patentansprüche

1. Vorrichtung für das Befördern von Glasplatten, mit den folgenden Merkmalen:
a) einer mit Förderrollen (17) bestückten Förderlinie,
b) einer Vielzahl von hintereinander linear angeordneten Portalstützen (1), die mittels Führungsträgern (2) verbunden sind und Säulenschlitten (3) tragen,
c) einer Vielzahl von Kammgreifern (22), die, jeweils mittels eines Säulenschlittens (3) horizontal auf den Führungsträgern (2) bewegt und von einer Hubsäule (4) vertikal geführt, mittels einer Schwenk- und Dreheinrichtung (21) positioniert werden, wobei die Kammgreifer (22) mit Saugern (12) bestückt sind, und wobei jeder Kammgreifer (22) mittels einer Teleskopvorrichtung (27) auf beiden Seiten die Breite seines Erfassungsbereichs verändern kann und eine kammartige Struktur mit fingerartigen Tragelementen aufweist, und wobei diese Tragelemente mit einer Anzahl von Saugern (12) bestückt sind,
d) einem Stapelgestell (15) zum linksgeneigten Abstellen einer Glasplatte (10) und/oder einem Stapelgestell (16) zum rechtsgeneigten Abstellen einer Glasplatte (10), wobei
e) großflächige Platten, insbesondere Glasplatten, in extremer Übergröße in der Größenordnung von über 40 Metern Länge und über 6 Metern Breite befördert werden, wobei eine Aufnahme der Platten von der Badseite oder der Luftseite möglich ist,
eine Vertikal-Hebevorrichtung (20) in der Länge und der Breite der jeweiligen Platte (10) vorgesehen, wobei diese links - und/oder rechts angeschlagen in einem Winkel bis zu 90 Grad schwenkbar ist, und wobei diese eine kammartige Struktur mit fingerartigen Tragelementen aufweist, und wobei diese Tragelemente mit einer Anzahl von Saugern (12) bestückt sind, und
wobei zur Steuerung der Kammgreifer (22) Sensoren (23) und bei einem Einsatz von zwei Kammgreifern (22) auf einem Führungsträger (2) zusätzlich Sensoren (26) zur Koordinierung der beiden Kammgreifer (22) eingesetzt werden, wobei an den entsprechenden Säulenschlitten (3) zusätzlich ausfahrbare Stabilisatoren (25) vorhanden sind und wobei zur Synchronisierung der Kammgreifer (22) Lasersensoren (42) verwendet werden, und
f) wobei für die Steuerung der gesamten Beförderungsanlage an jeder Portalstütze (1) so genannte Feldsensoren (24) installiert sind, die aufeinander gerichtet sind, die in der Form von hunderten von Minilinsen nach dem Lichtfeldprinzip optische Informationen sammeln, die dann später zu Bildern mit einer gewünschten Auflösung und/oder einem gewünschten Blickwinkel datentechnisch zusammengestellt werden können.

2. Vorrichtung nach Anspruch 1,
wobei
an der Vertikal-Hebevorrichtung (20) und/oder an den Kammgreifern (22) Power-Sauger (39) und/oder Präzisions-Sauger (40) eingesetzt werden,
wobei ein Power-Sauger ein kreisförmiges Filterelement (33) aufweist und der Durchlasswiderstand eines Filterelements (33) erfasst und an einem Monitor angezeigt wird, und
wobei ein Präzisions-Sauger (40) einen Dichtring (37) aufweist, der in einem Saugerkopf (38) aus festem Material geführt ist.

3. Vorrichtung nach Anspruch 1 oder 2,
wobei bei zu beschichtenden Glasplatten (10), zur Beförderung auf der Luftseite elektrostatische Greifer (41) und/oder Ultraschallgreifer verwendet werden.

4. Verfahren für das Befördern von Glasplatten, mit den folgenden Merkmalen:
a) die Glasplatten (10) werden auf Förderrollen (17) angeliefert,
b) die so angelieferte Glasplatte (10) wird mittels einer Vielzahl von, in ihren Bewegungsabläufen synchronisierten, Kammgreifern (22) mittels Saugern (12) auf einer Vielzahl von portalartig angeordneten Führungsträgern (2) erfasst und in der gewünschten Lage auf einem Stapelgestell (15, 16) abgestellt, wobei die Kammgreifer (22) auf der Vielzahl von portalartig angeordneten Führungsträgern (2) bewegt werden, und wobei jeder Kammgreifer (22) mittels einer Teleskopvorrichtung (27) auf beiden Seiten die Breite seines Erfassungsbereichs verändern kann, wobei
großflächige Platten, insbesondere Glasplatten, in extremer Übergröße in der Größenordnung von über 40 Metern Länge und über 6 Metern Breite befördert werden, wobei eine Aufnahme von der Badseite oder der Luftseite möglich ist,
die auf Förderrollen (17) angelieferten Glasplatten (10), mittels einer, sich über die gesamte Länge der Glasplatte (10) erstreckenden Vertikal-Hebevorrichtung (20) nach Bedarf entweder auf der linken oder der rechten Seite in einem spitzen bis rechten Winkel verschwenkt werden, wobei die Vorrichtung (20) kammartig strukturierte fingerartige Tragelemente aufweist, die durch die Förderrollen (17) greifen und Sauger (12) tragen, und
dass zur Steuerung der Kammgreifer (22) Sensoren (23) und bei einem Einsatz von zwei Kammgreifern (22) auf einem Führungsträger (2) zusätzlich Sensoren (26) zur Koordinierung der beiden Kammgreifer (22) eingesetzt werden, wobei an den entsprechenden Säulenschlitten (3) zusätzlich ausfahrbare Stabilisatoren (25) vorhanden sind, und wobei zur Synchronisierung der Kammgreifer (22) Lasersensoren (42) verwendet werden, wobei für die Steuerung der gesamten Beförderungsanlage an jeder Portalstütze (1) so genannte Feldsensoren (24) installiert sind, die aufeinander gerichtet sind, die in der Form von hunderten von Minilinsen nach dem Lichtfeldprinzip optische Informationen sammeln, die dann später zu Bildern mit einer gewünschten Auflösung und/oder einem gewünschten Blickwinkel datentechnisch zusammengestellt werden können.

5. Verfahren nach Anspruch 4,
wobei an der Vertikal-Hebevorrichtung (20) und/oder an den Kammgreifern (22) Power-Sauger (39) und/oder Präzisions-Sauger (40) eingesetzt werden,
wobei ein Power-Sauger ein kreisförmiges Filterelement (33) aufweist und der Durchlasswiderstand eines Filterelements (33) erfasst und an einem Monitor angezeigt wird, und
wobei ein Präzisions-Sauger (40) einen Dichtring (37) aufweist, der in einem Saugerkopf (38) aus festem Material geführt ist.

6. Verfahren nach Anspruch 4 oder 5,
wobei bei zu beschichtenden Glasplatten (10), zur Beförderung auf der Luftseite elektrostatische Greifer (41) und/oder Ultraschallgreifer verwendet werden.

7. Verfahren nach einem der Ansprüche 4 bis 6,
wobei die Portalstützen (1), die Kammgreifer (22) und die Vertikal-Hebevorrichtung (20) vereinzelt angewendet werden.

## Claims

1. Apparatus for conveying glass panels, comprising the following features:
a) a conveying line which is fitted with conveying rollers (17),
b) a large number of portal supports (1) which are arranged in a linear manner one behind the other and are connected by means of guide beams (2) and support column carriages (3),
c) a large number of comb-type grippers (22) which are positioned by means of a pivoting and rotating device (21) in a manner in which they are each moved horizontally on the guide beams (2) by means of a column carriage (3) and are vertically guided by a lifting column (4), wherein the comb-type grippers (22) are fitted with suction devices (12), and wherein each comb-type gripper (22) can change the width of its capture range on both sides by means of a telescopic apparatus (27) and has a comb-like structure with finger-like supporting elements, and wherein these supporting elements are fitted with a number of suction devices (12),
d) a stacking framework (15) for setting down a glass panel (10) such that it is inclined to the left and/or a stacking framework (16) for setting down a glass panel (10) such that it is inclined to the right, wherein
e) panels, in particular glass panels, of large surface area and of extreme size in the order of greater than 40 meters in length and greater than 6 meters in width are conveyed, wherein the panels can be held from the bath side or from the air side,
a vertical-lifting apparatus (20) is provided in the length and the width of the respective panel (10), wherein said vertical-lifting apparatus can be pivoted at an angle of up to 90 degrees such that it is stopped on the left and/or right-hand side, and wherein said vertical-lifting apparatus has a comb-like structure with finger-like supporting elements, and wherein these supporting elements are fitted with a number of suction devices (12), and
wherein in order to control the comb-type grippers (22), sensors (23) and, when two comb-type grippers (22) are used on one guide beam (2), sensors (26) for coordinating the two comb-type grippers (22) are additionally used, wherein extendable stabilizers (25) are additionally provided on the corresponding column carriages (3), and wherein laser sensors (42) are used in order to synchronize the comb-type grippers (22), and
f) wherein, in order to control the entire conveying system, so-called field sensors (24) are installed on each portal support (1), said field sensors being aligned with one another and, in the form of hundreds of mini lenses, collecting optical information in accordance with the optical field principle, it then being possible for said optical information to later be combined using data technology to form images with a desired resolution and/or a desired viewing angle.

2. Apparatus according to Claim 1,
wherein
power suction devices (39) and/or precision suction devices (40) are used on the vertical-lifting apparatus (20) and/or on the comb-type grippers (22),
wherein a power suction device has a circular filter element (33) and the flow resistance of a filter element (33) is detected and displayed on a monitor, and
wherein a precision suction device (40) has a sealing ring (37) which is guided in a suction device head (38) which is composed of solid material.

3. Apparatus according to Claim 1 or 2,
wherein
electrostatic grippers (41) and/or ultrasonic grippers are used for conveying purposes on the air side in the case of glass panels (10) which are to be coated.

4. Method for conveying glass panels comprising the following features:
a) the glass panels (10) are delivered on conveying rollers (17),
b) the glass panel (10) which is delivered in this way is captured by means of suction devices (12) on a large number of guide beams (2) which are arranged in a portal-like manner by means of a large number of comb-type grippers (22), of which the movement sequences are synchronized, and set down on a stacking framework (15, 16) in the desired location, wherein the comb-type grippers (22) are moved on the large number of guide beams (2) which are arranged in a portal-like manner, and wherein each comb-like grip (22) can change the width of its capture region on both sides by means of a telescopic apparatus (27), wherein
panels, in particular glass panels, of large surface area and of extreme size in the order of greater than 40 meters in length and greater than 6 meters in width are conveyed, wherein said panels can be held from the bath side or from the air side,
the glass panels (10), which are delivered on conveying rollers (17), are pivoted at an acute to right angle either on the left- or the right-hand side as required by means of a vertical-lifting apparatus (20) which extends over the entire length of the glass panel (10), wherein the apparatus (20) has finger-like supporting elements which are structured in a comb-like manner and which reach through the conveying rollers (17) and support suction devices (12), and
in that, in order to control the comb-type grippers (22), sensors (23) and, when two comb-type grippers (22) are used on one guide beam (2), sensors (26) for coordinating the two comb-type grippers (22) are additionally used, wherein extendable stabilizers (25) are additionally provided on the corresponding column carriages (3), and wherein laser sensors (42) are used in order to synchronize the comb-type grippers (22), wherein, in order to control the entire conveying system, so-called field sensors (24) are installed on each portal support (1), said field sensors being aligned with one another and, in the form of hundreds of mini lenses, collecting optical information in accordance with the optical field principle, it then being possible for said optical information to later be combined using data technology to form images with a desired resolution and/or a desired viewing angle.

5. Method according to Claim 4,
wherein
power suction devices (39) and/or precision suction devices (40) are used on the vertical-lifting apparatus (20) and/or on the comb-type grippers (22),
wherein a power suction device has a circular filter element (33) and the flow resistance of a filter element (33) is detected and displayed on a monitor, and
wherein a precision suction device (40) has a sealing ring (37) which is guided in a suction device head (38) which is composed of solid material.

6. Method according to claim 4 or 5,
wherein
electrostatic grippers (41) and/or ultrasonic grippers are used for conveying purposes on the air side in the case of glass panels (10) which are to be coated.

7. Method according to one of Claims 4 to 6,
wherein
the portal supports (1), the comb-type grippers (22) and the vertical-lifting apparatus (20) are employed separately.

## Revendications

1. Dispositif destiné au transport de plaques de verre, comprenant :
a) une ligne de transport équipée de rouleaux transporteurs (17),
b) une pluralité de montants de portiques (1) disposés linéairement les uns derrière les autres, lesquels montants sont reliés au moyen de supports de guidage (2) et portent des patins de colonnes (3),
c) une pluralité de pinces en peignes (22) qui se déplacent respectivement au moyen d'un patin de colonne (3) horizontalement sur les supports de guidage (2) et sont guidées verticalement par une colonne de levage (4), et sont positionnées au moyen d'un dispositif de pivotement et de rotation (21), dans lequel les pinces en peignes (22) sont munies de ventouses (12), et dans lequel chaque pince en peigne (22) peut modifier la largeur de sa zone de saisie des deux côtés au moyen d'un dispositif télescopique (27) et comporte une structure en peigne ayant des éléments de support en forme de doigts, et dans lequel lesdits éléments de support sont munis d'une pluralité de ventouses (12),
d) un bâti d'empilage (15) destiné à mettre en place de manière inclinée vers la gauche une plaque de verre (10), et/ou un bâti d'empilage (16) destiné à mettre en place de manière inclinée vers la droite une plaque de verre (10), dans lequel
e) des plaques de grande surface, notamment des plaques de verre de très grande taille ayant une longueur d'un ordre de grandeur supérieur à 40 mètres et une largeur supérieure à 6 mètres sont transportées, dans lequel les plaques peuvent être reçues par le côté bain ou par le côté air,
un dispositif de levage vertical (20) est prévu suivant la longueur et la largeur de la plaque respective (10), dans lequel ledit dispositif peut être amené à pivoter d'un angle allant jusqu'à 90 degrés lorsqu'il est sollicité vers la gauche et/ou vers la droite, et dans lequel ledit dispositif présente une structure en peigne ayant des éléments de support en forme de doigts, et dans lequel lesdits éléments de support sont équipés d'une pluralité de ventouses (12), et
dans lequel des capteurs (23) et, lors de l'utilisation de deux pinces en peignes (22) sur un support de guidage (2), des capteurs supplémentaires (26) destinés à coordonner les deux pinces en peignes (22) sont mis en oeuvre pour commander les pinces en peignes (22), dans lequel des stabilisateurs (25) pouvant être en outre sortis sont présents sur les patins de colonnes (3) correspondants et dans lequel des capteurs à laser (42) sont utilisés pour la synchronisation des pinces en peignes (22), et
f) dans lequel des capteurs dits de champ (24) sont installés pour commander l'ensemble de l'installation de transport au niveau de chacun des montants de portiques (1), lesquels capteurs de champ sont orientés les uns vers les autres, collectent des informations optiques, sous la forme de centaines de mini-lentilles selon le principe du champ optique, et peuvent être assemblés ultérieurement par une technique de traitement de données en des images ayant une résolution souhaitée et/ou un champ visuel souhaité.

2. Dispositif selon la revendication 1,
dans lequel des ventouses de puissance (39) et/ou des ventouses de précision (40) sont mis en place sur le dispositif de levage vertical (20) et/ou sur les pinces en peignes (22),
dans lequel une ventouse de puissance comporte un élément de filtrage circulaire (33) et la résistance au passage d'un élément de filtrage (33) est détectée et est affichée sur un écran, et
dans lequel une ventouse de précision (40) comporte une bague d'étanchéité (37) qui est guidée dans une tête de ventouse (38) constituée d'un matériau rigide.

3. Dispositif selon la revendication 1 ou 2, dans lequel, dans le cas de plaques de verre devant être revêtues (10), on utilise des pinces électrostatiques (41) et/ou des pinces à ultrasons pour le transport du côté air.

4. Procédé de transport de plaques de verre, présentant les caractéristiques suivantes :
a) les plaques de verre (10) sont délivrées sur des rouleaux transporteurs (17),
b) la plaque de verre (10) ainsi délivrée est saisie au moyen d'une pluralité de pinces en peignes (22) dont les séquences de mouvement sont synchronisées au moyen de ventouses (12) sur une pluralité de supports de guidage (2) disposés sous la forme d'un portique et est mise en plaque à la position souhaitée sur le bâti d'empilage (15, 16), dans lequel les pinces en peignes (22) sont déplacées sur la pluralité de supports de guidage (2) disposés sous la forme d'un portique, et dans lequel chaque pince en peigne (22) peut modifier la largeur de sa zone de saisie des deux côtés au moyen d'un dispositif télescopique (27),
dans lequel des plaques, notamment des plaques de verre de très grande taille ayant une longueur d'un ordre de grandeur supérieur à 40 m et une largeur supérieure à 6 m sont transportées, dans lequel les plaques peuvent être reçues par le côté bain ou par le côté bain ou par le côté air,
les plaques de verre (10) sont délivrées sur des rouleaux transporteurs (17), sont amenées à pivoter selon les besoins, soit vers le côté gauche, soit vers le côté droit d'un angle aigu à droit au moyen d'un dispositif de levage vertical (20) s'étendant sur toute la longueur de la plaque de verre (10), dans lequel le dispositif (20) comporte des éléments de support à structure en peigne en forme de doigts, lesquels éléments de support exercent une préhension par l'intermédiaire des rouleaux transporteurs (17) et supportent des ventouses (12), et
dans lequel des capteurs (23) sont utilisés pour commander les pinces en peignes (22) et, lors de la mise en oeuvre de deux pinces en peignes (22) sur un support de guidage (2), des capteurs supplémentaires (26) sont utilisés pour coordonner les deux pinces en peignes (22), dans lequel des stabilisateurs (25) supplémentaires pouvant être sortis sont présents sur les patins de colonnes (3) correspondants, et dans lequel des capteurs à laser (42) sont utilisés pour la synchronisation des pinces en peignes (22), dans lequel des capteurs dits de champ (24) sont installés sur chaque montant de portique (1) pour commander l'ensemble de l'installation de transport, lesquels capteurs de champ sont orientés les uns vers les autres, collectent des informations optiques, sous la forme de centaines de mini-lentilles selon le principe du champ optique, et peuvent être assemblés ultérieurement par une technique de traitement de données en des images ayant une résolution souhaitée et/ou un champ visuel souhaité.

5. Procédé selon la revendication 4,
dans lequel des ventouses de puissance (39) et/ou des ventouses de précision (40) sont mises en place sur le dispositif de levage vertical (20) et/ou sur les pinces en peignes (22),
dans lequel une ventouse de puissance comporte un élément de filtrage circulaire (33) et la résistance au passage d'un élément de filtrage (33) est détectée et est affichée sur un écran, et
dans lequel une ventouse de précision (40) comporte une bague d'étanchéité (37) qui est guidée dans une tête de ventouse (38) constituée d'un matériau rigide.

6. Procédé selon la revendication 4 ou 5,
dans lequel, dans le cas de plaques de verre (10) devant être revêtues (10), des pinces électrostatiques (41) et/ou des pinces à ultrasons sont utilisées pour le transport sur le côté air.

7. Procédé selon l'une quelconque des revendications 4 à 6
dans lequel les montants de portiques (1), les pinces en peignes (22) et le dispositif de levage vertical (20) sont mis en oeuvre de manière isolée.
